# EUROPÄISCHE PATENTSCHRIFT

(11) **EP 2 545 149 B1**
(45) Veröffentlichungstag und Bekanntmachung des Hinweises auf die Patenterteilung: **08.07.2015**
(21) Anmeldenummer: 11711243.3
(22) Anmeldetag: 11.03.2011
(51) Int. Cl.: C11B 1/06

(54) **LIPIDABTRENNUNG AUS SUSPENSIONEN**
LIPID REMOVAL FROM SUSPENSIONS
SÉPARATION DE LIPIDES DE SUSPENSIONS

(30) Priorität: 11.03.2010 AT 3962010
(43) Veröffentlichungstag der Anmeldung: 16.01.2013
(73) Patentinhaber: Natex Prozesstechnologie GesmbH, 2630 Ternitz (AT)
(72) Erfinder: LACK, Eduard, A-2700 Wr. Neustadt (AT); SIEDLITZ, Helmut, A-2630 Ternitz (AT); SOVA, Martin, A-2630 Ternitz (AT); LANG, Franz, A-1220 Wien (AT)
(74) Vertreter: Keschmann, Marc
(86) Internationale Anmeldenummer: PCT/AT2011/000128
(87) Internationale Veröffentlichungsnummer: WO 2011/109852

(56) Entgegenhaltungen:
- WO-A1-2004/018070
- DE-A1- 4 326 399
- US-A- 6 166 231
- US-A1- 2009 047 720

## Beschreibung

Die Erfindung betrifft ein Verfahren zum Extrahieren von Lipiden aus wässrigen Suspensionen von Biomasse, insbesondere aus aufgeschlossenen Algensuspensionen, unter Verwendung von mit Wasser nicht mischbaren Lösungsmitteln.

Die US 2009/047720 A1 sowie die US 6166231 beschreiben jeweils Verfahren, bei welchen Öl aus einem Fermentationsansatz enthaltend ölhaltige Biomasse in einem Flüssig-Flüssig Extraktor extrahiert wird.

In letzter Zeit finden Algen verschiedenster Art vermehrt Beachtung als Rohstofflieferant. Zur Herstellung von Biotreibstoffen aus Lipiden von Algen müssen keine landwirtschaftlichen Flächen, die für den Anbau von Pflanzen für die Ernährung gebraucht werden, beansprucht werden, wobei die Kultivierung von Algen im Vergleich zum Anbau von Pflanzen auf dem Festland überaus einfach ist. Die Zucht von Algen kann sowohl in den Küstengebieten der Erde als auch auf dem Festland in Algenfarmen betrieben werden und liefert mit geringem Einsatz von Nährstoffen oder Düngemitteln unter Verwertung von CO₂ lediglich aufgrund der Sonnenenergie große Mengen an Biomasse, wobei aufgrund des schnellen Wachstums von Algen, bezogen auf die Fläche, eine ungleich höhere Menge an Lipiden, welche zu Biotreibstoffen oder ähnlichem weiterverarbeitet werden können, gewonnen werden kann.

Ein Verfahren der eingangs genannten Art ist bereits in der WO 93/25644 bekannt geworden. Bei diesem Verfahren zur Gewinnung von Lipiden werden als Rohmaterial einzellige Algen (Mikroalgen), aber auch Makroalgen mit einem Wassergehalt ≤ 50 Gew.-% eingesetzt. Zur Extraktion der Lipide werden gemäß der Beschreibung dieses Dokuments vor allem mit Wasser mischbare, organische Lösungsmittel wie kurzkettige Alkohole verwendet, wobei jedoch auch komprimierte Gase, wie beispielsweise Propan, welches ein mit Wasser nicht mischbares Gas darstellt, genannt sind. In der WO 93/25644 sind in den Ansprüchen zwar Wassergehalte des Extraktionsgutes von bis zu 50 Gew.-% genannt, jedoch betreffen die Ausführungsbeispiele dieser Anmeldung Anwendungen, bei denen der Wassergehalt des Algenmaterials, welches im allgemeinen Algenmehl aus Makroalgen ist, wesentlich niedriger ist. Insbesondere ist davon die Rede, dass Makroalgen vor ihrer Zermahlung getrocknet werden, um einen Wassergehalt von unter 50 Gew.-% zu erreichen. Bei diesen Beispielen beziehen sich die Wassergehalte somit offensichtlich auf den Wassergehalt der Algenzellen selbst. Problematisch ist hierbei allerdings, dass die Algen aus aquatischer Kultur für die Extraktion unter erheblichem Energie- und Zeitaufwand getrocknet werden mussten, um die erforderlichen Wassergehalte zu erreichen und die Extraktion wirtschaftlich betreiben zu können.

Es ist somit Aufgabe der vorliegenden Erfindung, ein Verfahren der eingangs genannten Art dahingehend zu verbessern, dass wässrige Suspensionen von Biomasse, und insbesondere aufgeschlossene Algensuspensionen, unter Verwendung von mit Wasser nicht mischbaren Lösungsmitteln ohne vorhergehende Trocknungsschritte zur Gewinnung von Lipiden extrahiert werden können, wodurch eine erhöhte Wirtschaftlichkeit der Lipidgewinnung aus Algen erreicht werden soll.

Zur Lösung dieser Aufgabe ist das Verfahren der eingangs genannten Art erfindungsgemäß dahingehend weitergebildet, dass die Suspension mit einem Biomasseanteil bis 50 Gew.-% kontinuierlich in einen druckfesten Dünnschichtextraktor eingepresst wird, ein dünner Film der Suspension am zylindrischen Innenmantel des Extraktors ausgebildet wird, der dünne Film mit dem Lösungsmittel, welches in dem Dünnschichtextraktor in flüssigem oder überkritischem Zustand vorliegt, in Kontakt gebracht wird, der dünne Film mit Hilfe eines im Extraktor angeordneten Rotors mechanisch beaufschlagt wird, wobei der dünne Film der Suspension durch die mechanische Beaufschlagung über zumindest einen Teil der Schichtstärke des dünnen Films ständig erneuert wird, die Suspension im ringförmigen Spalt zwischen Innenmantel des Extraktors und Außenumfang des Rotors nach unten gedrückt wird und das und das mit den extrahierten Lipiden beladene Lösungsmittel aus dem Extraktor ausgetragen wird, worauf das Lösungsmittel isobar durch Phasenwechsel oder durch Entspannen aus der Lösung aus Lösungsmittel und Lipiden zurückgewonnen und die extrahierten Lipide abgetrennt werden. Anders als beim Stand der Technik kann bei der vorliegenden Erfindung ein geringerer Algen- bzw. Biomasseanteil in der Suspension vorliegen, und insbesondere kann der Anteil so niedrig sein, dass es ausreicht, nach der Ernte der Algen lediglich eine Sedimentation der Algen durchzuführen und die sedimentierten Algen nach einem Zellaufschluss direkt für die Extraktion heranzuziehen, wobei die aufgeschlossenen Algen erfindungsgemäß einem Dünnschichtextraktor zugeführt werden, in welchem die Algensuspension bzw. die Suspension anderer Biomasse in einer dünnen Schicht auf einer Oberfläche aufgetragen wird und dadurch die aufgeschlossenen Algen und somit die in den Algen enthaltenen Lipide für den Zutritt des Lösungsmittels dargeboten werden. Durch den Einsatz eines Dünnschichtextraktors, welcher kontinuierlich betrieben wird, wird somit der an sich problematische hohe Wasseranteil kompensiert, da das Lösungsmittel aufgrund der enormen Oberflächenvergrößerung in dem Dünnschichtextraktor die Fetttröpfchen aus dem Algenaufschluss leicht erreichen kann. Dadurch, dass ein Lösungsmittel gewählt wird, welches mit Wasser nicht mischbar ist, wobei das Lösungsmittel in dem Dünnschichtextraktor in flüssigem oder überkritischem Zustand vorliegt, geht kein Lösungsmittel in der großen Menge an Wasser in dem Dünnschichtextraktor verloren, was bei der Verwendung beispielsweise von Kohlendioxid durchaus der Fall wäre. Praktisch kann somit das gesamte eingesetzte Lösungsmittel für die Extraktion der Lipide zurückgewonnen und in den Dünnschichtextraktor zur Wiederverwendung zurückgeführt werden. In einem Abscheidersystem bleiben durch Verdampfen oder Entspannen somit die Lipide der Algen zurück und können entsprechend weiterverarbeitet werden.

Unter einem Dünnschichtextraktor, wie er bei der vorliegenden Erfindung zum Einsatz gelangt, ist eine Vorrichtung zu verstehen, wie sie beispielsweise der WO 2004/018070 A1 zu entnehmen ist. Ein solcher Dünnschichtextraktor weist einen druckfesten Reaktor mit wenigstens einer Aufgabeöffnung für die zu behandelnde Biomassesuspension bzw. Algensuspension und das komprimierte Extraktionsmittel sowie entsprechende Austragsöffnungen auf, wobei die Aufgabeöffnung für die zu behandelnde Algensuspension am Innenmantel des Reaktors mündet und ein Rotor im Inneren des Reaktors angeordnet ist, dessen radiale Arme mit dem Algensuspensionsfilm am Innenmantel des Reaktors zusammenwirken. Durch die Verwendung eines Reaktors, in dessen Inneren ein Rotor angeordnet ist, wird die Möglichkeit geschaffen, die mechanische Einwirkung durch zusätzliches Einwirken von Zentrifugalkräften vorzunehmen, wobei eine entsprechende rasche Rotation zur Aufbringung der gewünschten Zentrifugalkraft erfolgen kann. Gleichzeitig bildet der Rotor die Werkzeuge für eine mechanische Bearbeitung des dünnen Filmes, welche im einfachsten Fall von Wischern, Rollen, Rakelmessern oder dergleichen gebildet werden können. Derartige Dünnschichtextraktoren eigenen sich prinzipiell zur Verarbeitung von Rohstoffen mit relativ hohem Feststoffgehalt, wobei gemäß der Lehre der WO 2004/018070 vor allem Kohlendioxid als Lösungsmittel vorgesehen ist. Bei den erfindungsgemäß zu verarbeitenden Rohstoffen, welche zur Erzielung der gewünschten Wirtschaftlichkeit der Extraktion von Algensuspensionen einen sehr niedrigen Feststoffgehalt aufweisen, ist es aber erfindungsgemäß vorsehen, in einem solchen Extraktor anstelle von Kohlendioxid, welches sich mit Wasser mischt, ein mit Wasser nicht mischbares Lösungsmittel zu verwenden, um kein Lösungsmittel in der großen Menge an Wasser zu verlieren. Ein positiver Nebenaspekt der Verwendung derartiger Lösungsmittel liegt darüber hinaus darin, dass aufgrund der wesentlich moderateren Extraktionsbedingung der technische Aufwand und somit die Kosten des Verfahrens gesenkt werden.

Der Dünnschichtextraktor, der erfindungsgemäß zum Einsatz gelangen soll, kann im Vergleich zu der Vorrichtung gemäß der WO 2004/018070 mit speziellen Einbauten versehen sein, welche weiter unten noch besprochen werden.

Um eine einfache Trennung des Lösungsmittels von den extrahierten Lipiden zu erreichen, ist das Verfahren gemäß einer bevorzugten Ausführungsform der vorliegenden Erfindung dahingehend weitergebildet, dass als Lösungsmittel kurzkettige Alkane, insbesondere Propan eingesetzt wird. Kurzkettige Alkane wie beispielsweise Propan, weisen bei den erfindungsgemäß vorgesehenen Bedingungen im Dünnschichtextraktor und insbesondere bei Bedingungen, bei denen das Lösungsmittel in flüssigem bzw. überkritischem Zustand vorliegt, ausgezeichnete Lösungseigenschaften für die zu extrahierenden Lipide auf, bieten jedoch gleichzeitig den Vorteil, dass dann, wenn die Lösung aus Lösungsmittel und extrahierten Lipiden entspannt wird, eine nur sehr geringe Löslichkeit der Lösungsmittel in den extrahierten Lipiden zu beobachten ist, sodass es durch Übergang des Lösungsmittels in die Gasphase zu einer einfachen Rückgewinnung des Lösungsmittels und einer praktisch vollständigen Abtrennung der gewünschten Lipide kommt. Bei Verwendung von noch lipophileren Lösungsmitteln würden zwar ebenso gute Extraktionsergebnisse erzielt, jedoch wäre eine Trennung von Lösungsmitteln und Lipiden lediglich mit erhöhtem Aufwand beispielsweise bei erhöhten Temperaturen und/oder vermindertem Druck möglich. Das erfindungsgemäße Verfahren gemäß dieser bevorzugten Ausführungsform bietet somit die Möglichkeit, Algensuspensionen ohne vorherige Trocknung für die Extraktion von Lipiden heranzuziehen, wobei die Lösung aus Lösungsmittel und Lipiden lediglich entspannt werden muss, um die Lipide abzutrennen und das Lösungsmittel für eine neuerliche Verwendung bei der Extraktion zurückzugewinnen. Prinzipiell lässt sich das erfindungsgemäße Verfahren auf alle möglichen Algen- bzw. Biomasse Suspensionen anwenden, die einen entsprechenden Feinheitsgrad aufweisen bzw. einem geeigneten Zellaufschluss zugeführt wurden, wobei jedoch das Verfahren bevorzugt dahingehend weitergebildet ist, dass als Algenrohstoff Mikroalgen eingesetzt werden. Mikroalgen mit einer Größe von ungefähr 20 µm und weniger sind besonders einfach und platzsparend zu kultivieren und können ohne die Notwendigkeit einer mechanischen Zerkleinerung einem Zellaufschluss zur Freisetzung der Lipide zugeführt werden. Mikroalgen weisen dabei einen besonders hohen Lipidanteil von 50 Gew.-% und zum Teil auch mehr auf und die für die Extraktion gewünschte Erhöhung des Algen- bzw. Feststoffanteils der Algensuspension kann nach der Ernte der Algen aus einem Kulturbecken beispielsweise lediglich aus Sedimentation und Dekantieren des überstehenden Wassers erfolgen. Wesentlich für die Wirtschaftlichkeit ist, wie bereits erwähnt, dass der Aufwand für die Vorbereitung der Algen vor der Extrahierung möglichst gering gehalten wird. Das erfindungsgemäße Verfahren ist daher mit Vorteil dahingehend weitergebildet, dass der Algenanteil der Algensuspension 5-40 Gew.-%, insbesondere 10-35 Gew.-%, bevorzugt 15-30 Gew.-% und insbesondere bevorzugt 20-25 Gew.-% beträgt, wobei derartige Algen- bzw. Feststoffanteile ohne weiteres mit der oben beschriebenen Sedimentation der Algen aus der Kulturlösung bzw. allenfalls unter Anwendung einer groben Filtration oder ähnlichem erreicht werden können.

Wie bereits erwähnt, ist es bei dem erfindungsgemäßen Verfahren vorgesehen, die Algen oder auch andere Biomasse einem Zellaufschluss zu unterwerfen, um die in den Zellen enthaltenen Lipide für den Zutritt des Lösungsmittels freizusetzen. Bevorzugt wird hierbei so vorgegangen, dass der Zellaufschluss der Algen enzymatisch mittels Cellulasen vorgenommen wird, wobei es gemäß einer bevorzugten Ausführungsform der vorliegenden Erfindung auch vorgesehen sein kann, dass die Algen mechanisch aufgeschlossen werden, wenn Makroalgen verarbeitet werden sollen.

Bei der Anwendung des erfindungsgemäßen Verfahrens fallen hochwertige Lipide als Extrakt an, wobei für die Verwendung der Lipide als Nahrungsmittelzusatzstoff eine gründliche Entfernung eventuell nach der Entspannung in den Lipiden verbleibender Lösungsmittelreste nötig wäre. Eine derartige aufwendige Raffination kann jedoch entfallen, wenn gemäß einer bevorzugten Ausführungsform der vorliegenden Erfindung die extrahierten Lipide durch Veresterung zu Biodiesel und/oder durch Cracken zu anderen Kraftstoffen weiterverarbeitet werden. Reste kurzkettiger Alkane, wie beipielsweise Propan oder Butan, in den extrahierten Lipiden sind bei der Verarbeitung zu Kraftstoffen unproblematisch, sodass eine weitere Erhöhung der Wirtschaftlichkeit des erfindungsgemäßen Verfahrens erreicht wird. Die Weiterverarbeitung zu den genannten Kraftstoffen erfolgt hierbei nach aus dem Stand der Technik bekannten Methoden.

Gemäß einer Ausführungsform der vorliegenden Erfindung wird bevorzugt derart vorgegangen, dass die Rückstände der Extraktion durch Fermentation zu Bioethanol bzw. Biogas weiterverarbeitet werden. Wie bereits erwähnt, liefert die Kultivierung von Algen überaus große Mengen von Biomasse, wobei die Lipide lediglich einen Teil der verwertbaren Substanz darstellen. Die Rückstände der Extraktion, welche vor allem aus Kohlenhydraten, jedoch auch aus anderen Zellwandbestandteilen und Bestandteilen der Zellorganellen bestehen, können mit bekannten Verfahren ebenfalls verwertet werden, wodurch wiederum ein erhöhter Nutzen entsteht.

Bei dem erfindungsgemäß zum Einsatz gelangenden Dünnschichtextraktor wird eine dünne Schicht des zu extrahierenden Materials auf eine Oberfläche aufgebracht, wobei erfindungsgemäß vorgesehen ist, dass der dünne Film der Algensuspension in dem Dünnschichtextraktor durch mechanische Beaufschlagung über zumindest einen Teil der Schichtstärke des dünnen Films ständig erneuert wird. Durch diese ständige Erneuerung des Films und dessen mechanischer Bearbeitung durch Scher- und walzkräfte, welche durch die rotierenden Werkzeuge des Dünnschichtextraktors auf den Film ausgeübt werden, wird sichergestellt, dass trotz des geringen Feststoffanteils die Algenbestandteile aus den aufgeschlossenen Algen immer wieder an die Oberfläche und somit in Kontakt mit dem flüssigen oder überkritischen Lösungsmittel treten, sodass eine mehr oder weniger quantitative Extraktion der Lipide erfolgen kann.

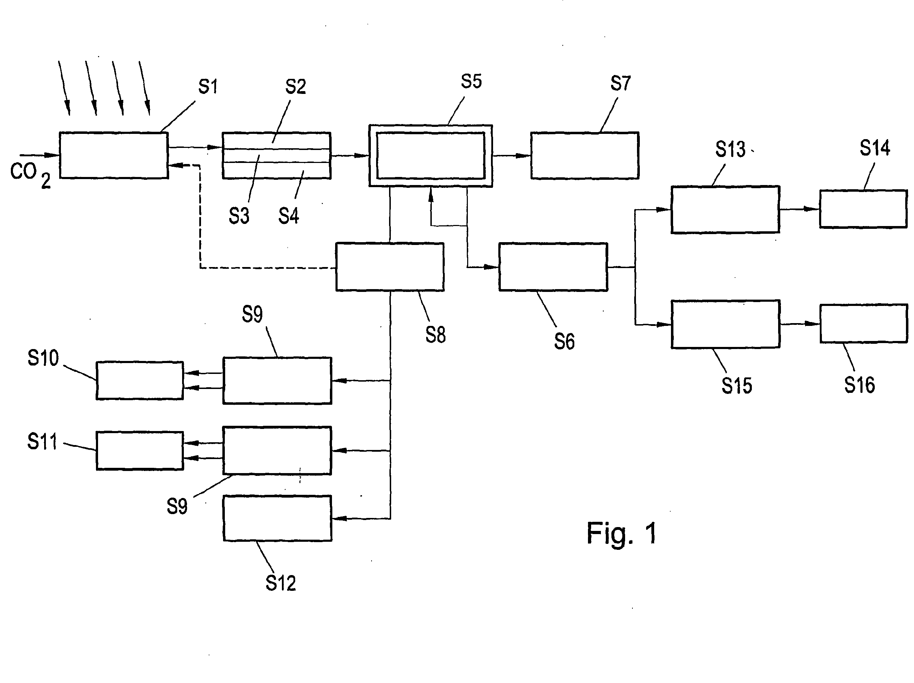

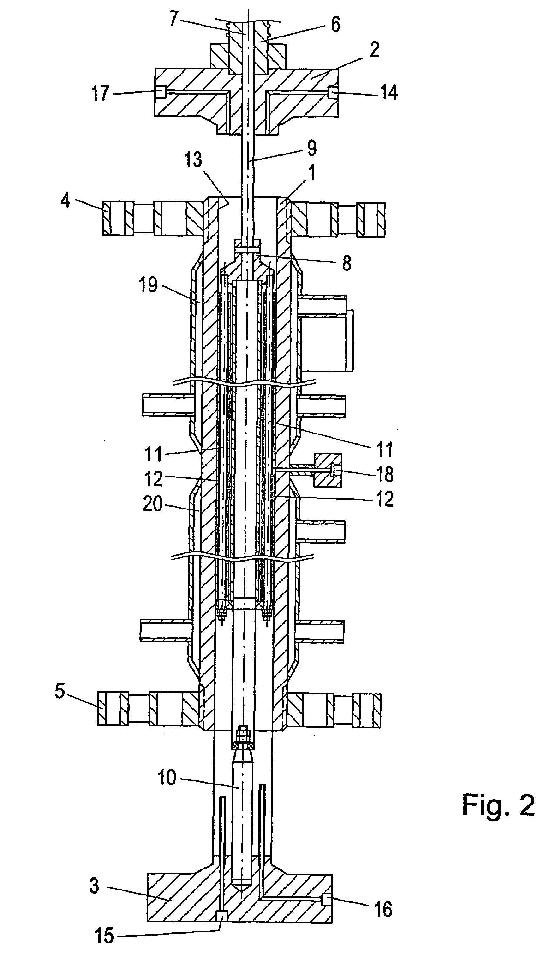

Die Erfindung wird im nachfolgenden anhand eines in den Figuren dargestellten Ausführungsbeispiels näher erläutert. In diesen zeigen Fig. 1 eine schematische Darstellung des erfindungsgemäßen Verfahrens und Fig. 2 eine schematische Darstellung des erfindungsgemäß zum Einsatz gelangenden Dünnschichtextraktors.

In Fig. 1 ist ein Algenkultivierungsbecken (S1) symbolisiert. Dabei kann ein solches Becken in einem flachen Bereich in Küstennähe beispielsweise in einem ehemaligen Salzbecken liegen, jedoch sind auch jegliche andere Formen aquatischer Kultur denkbar. Insbesondere werden in letzter Zeit Bemühungen dahingehend betrieben, Algen in Röhren zu kultivieren, wobei diese Röhren die Schichtdicke der Algensuspension begrenzen sollen, um einen Zutritt des Sonnenlichts zu den Algen im gesamten Volumen der Suspension zu ermöglichen. Zum Wachstum benötigen die Algen neben einigen wenigen Nährstoffen, welche sich aber ohne menschliches Zutun im Meerwasser befinden, auch Kohlendioxid, welches aus der Luft aufgenommen wird. Nach einer ausreichenden Wachstumsphase können die Algen geerntet werden, wobei dies beispielsweise wöchentlich erfolgen kann. Die Algen werden in der Folge beispielsweise durch Sedimentierung oder Filtration (S2) angereichert, wodurch der Feststoffgehalt der Algensuspension ansteigt. Das überstehende Wasser kann beispielsweise abdekantiert werden, sodass ein geeigneter Algenbrei für die Extraktion (S5) zur Verfügung steht. Vor der Extraktion erfolgen noch eine Homogenisierung (S3) und vor allem ein Zellaufschluss (S4), um die Lipide für den Zutritt des Lösungsmittels freizusetzen. Im nächsten Schritt erfolgt die Extraktion (S5) in einem Dünnschichtreaktor, wie er bereits beschrieben wurde und in Fig. 2 näher dargestellt werden wird. Bei der Extraktion (S5) werden die Lipide aus der aufgeschlossenen Algensuspension extrahiert und nach Entspannen der Lösung aus Lösungsmittel und Lipiden werden die Lipide in Form eines Öls (S6) erhalten, wobei das Lösungsmittel aus dem Extrakt ausgast und in den Dünnschichtextraktor rückgeführt werden kann. Als Nebenprodukt fallen noch lipophile bioaktive Substanzen (S7) an. Die entölten Algen bilden einen Extraktionsrückstand (S8), dessen Biomoleküle, wie Kohlenhydrate, durch Fermentation (S9) beispielsweise zu Bioethanol (S10) bzw. Biogas (S11) weiterverarbeitet werden können. Die verbleibenden Reststoffe können als Tierfutter (S12) verwendet werden. Alternativ kann der Extraktionsrückstand in das Algenkultivierungsbecken (S1) rückgeführt werden. Aus dem extrahierten Öl (S6) können durch Veresterung (S13) Biodiesel (S14) oder durch Cracken (S15) andere Kraftstoffe (S16) gewonnen werden.

In Fig. 2 ist nun der erfindungsgemäß zum Einsatz gelangende Dünnschichtextraktor näher dargestellt. In Fig. 2 ist mit 1 ein druckfester Reaktor bezeichnet, welcher zylinder- bzw. rohrförmig ausgebildet ist. Der Reaktor 1 kann mittels eines Deckelteiles 2 und eines Bodenteiles 3 druckfest verschlossen werden, wobei die Verbindung über die Flansche 4 und 5 erfolgt. Im Deckelteil 2 ist ein Rührwerk 6 angeordnet, welches eine Magnetkupplung zum rotierenden Antreiben einer Rührwerkswelle 7 aufweist. Die Rührwerkswelle 7 ist ihrerseits mit dem Rotor 8 verbunden, welcher im Inneren des Reaktors 1 um eine Rotationsachse 9 rotierbar gelagert ist. Die entsprechende Führung bzw. Zentrierung des Rotors erfolgt über einen Dorn 10, welcher mit dem Bodenteil 3 fest verbunden ist. Der Rotor 8 trägt mehrere kreisförmig verteilt angeordnete Führungsstangen 11, welche als Führung für drehbar gelagerte Rollen 12 dienen, sodass bei einer Rotation des Rotors 8 um die Drehachse 9 die Rollen 12 entlang des Innenumfanges 13 des Reaktors 1 abrollen können.

Im Deckel 2 ist nun eine Aufgabeöffnung 14 für die zu behandelnde Suspension vorgesehen. Die Aufgabeöffnung mündet hierbei im Bereich des Innenumfanges 13 des Reaktors 1 in den zylinderförmigen Reaktorraum. Durch Einpressen der zu behandelnden Algensuspension über die Aufgabeöffnung 14 wird die Algensuspension nun im Inneren des Reaktors 1 in Richtung zur Austragsöffnung 15 gefördert, wobei die Algensuspension im ringförmigen Spalt zwischen Innenumfang 13 des Reaktors 1 und Außenumfang des Rotors 8 nach unten gedrückt wird. In diesem Bereich wird die Algensuspension von den rotierenden Rollen 12 mechanisch beaufschlagt, sodass ein äußerst dünner Flüssigkeitsfilm zwischen den rotierenden Rollen 12 und dem Innenumfang 13 des Reaktors 1 ausgebildet wird. Die Dicke des Flüssigkeitsfilmes wird hierbei durch den voreingestellten Abstand der Rollen 12 zum Innenmantel 13 des Reaktors 1 bestimmt. Die Rollen 12 können eine schraubenlinienförmige Profilierung aufweisen, aber auch konisch, konkav oder konvex ausgeführt sein, wobei die Profilierung beim Abrollen entlang des Flüssigkeitsfilmes gleichzeitig eine Abwärtsbewegung des Flüssigkeitsfilmes in Richtung zur Austragsöffnung 15 begünstigt.

Im Gegenstrom zur Algensuspension wird nun das Extraktionsmittel in den Reaktor eingeführt, wobei die entsprechende Aufgabeöffnung im Bodenteil 3 ausgebildet und mit 16 bezeichnet ist. Das Extraktionsmittel steigt im Inneren des Reaktors 1 auf und gelangt in intensiven Kontakt mit dem Flüssigkeitsfilm, wobei die dem Extraktionsmittel ausgesetzte Oberfläche des Flüssigkeitsfilmes durch den von den rotierenden Rollen 12 bewirkten Walk- bzw. Knetvorgang ständig erneuert wird. Das mit den extrahierten Lipiden beladene Extraktionsmittel kann in der Folge über die im Deckel 2 vorgesehene Austrittsöffnung 17 abgezogen werden.

Ergänzend ist eine verschließbare Öffnung 18 vorgesehen, über welche während des Betriebes Proben entnommen oder verschiedene Betriebsparameter überprüft werden können. Eine weitere derartige Öffnung kann auch im Bodenteil 3 vorgesehen sein.

Der druckfeste Reaktor 1 ist weiters von Heiz- bzw. Kühlmänteln 19 und 20 umgeben, welche von einer Heiz- bzw. Kühlflüssigkeit und insbesondere Wasser im Gleich- oder Gegenstrom mit der zu behandelnden Flüssigkeit bzw. Dispersion durchströmt werden können.

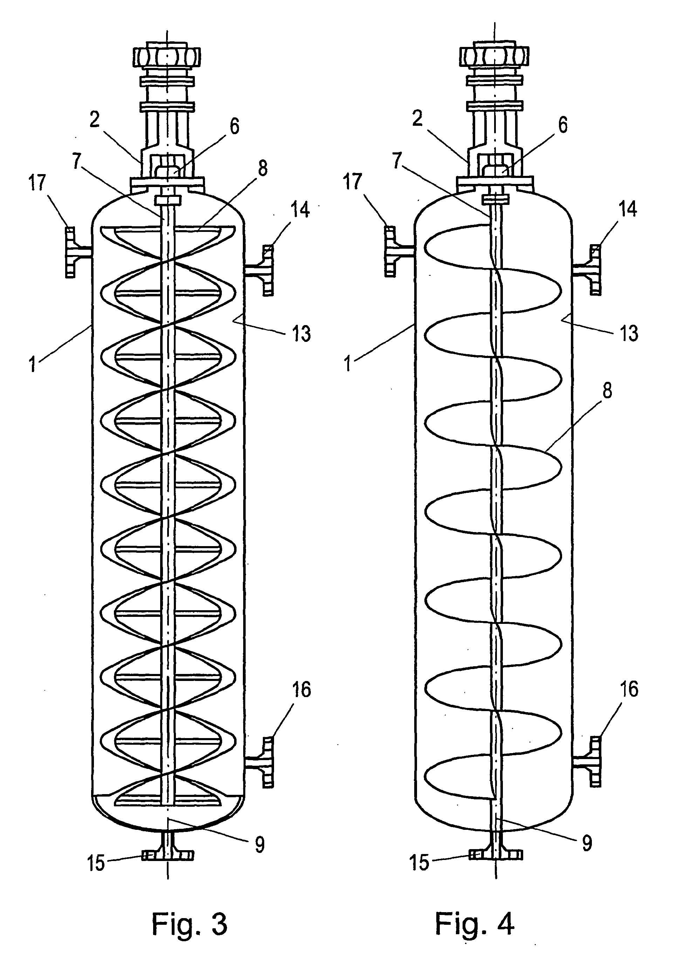

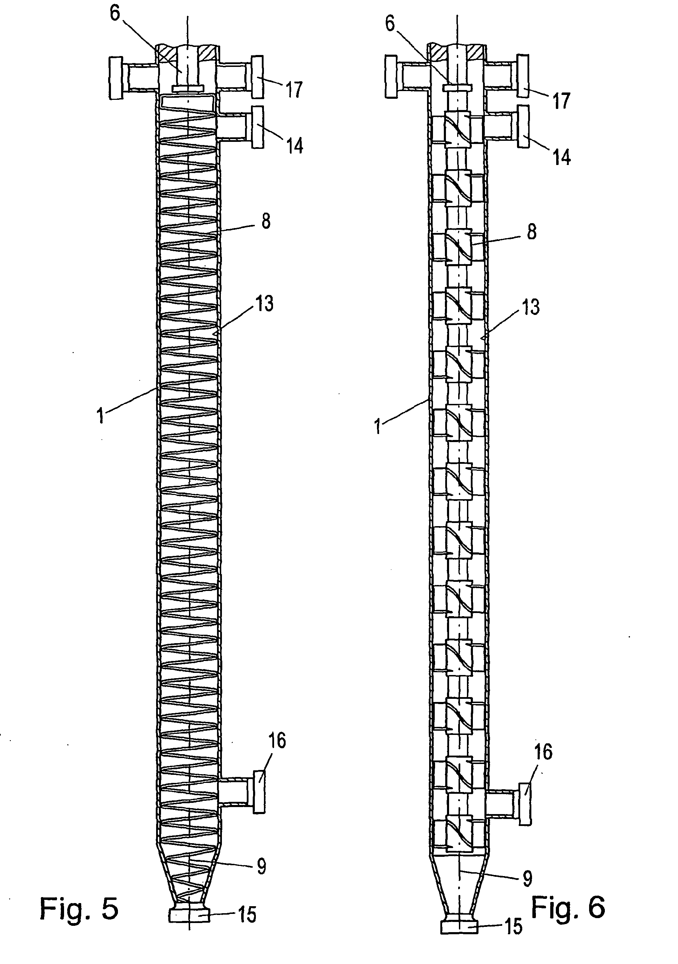

In den Figuren 3, 4, 5 und 6 sind modifizierte Dünnschichtextraktoren gezeigt, die nach dem gleichen Prinzip wie der eben beschriebene arbeiten. Wenn vorhanden, sind gleiche Bauteile mit gleichen Bezugszeichen versehen. Die Modifikationen betreffen vor allem verschiedene Konfigurationen des Rotors 8, wobei insbesondere schrauben- bzw. helixförmige Geometrien von Vorteil sind, um das zu extrahierende Gut durch den Extraktor zu fördern. Die gemäß Abbildungen 3, 4, 5 und 6 weiterentwickelten Einbauten ermöglichen zusätzlich zur optimierten Algenextraktion, die ebenfalls kontinuierliche Verarbeitung jeglicher Art von Suspensionen wie mit Hefen, Pilzen, Eigelb aber auch vermahlene und fein suspendierte Gewürze und Kräuter. Darüber hinaus können auch andere Suspensionen pflanzlichen Ursprungs zur Gewinnung von ätherischen Ölen und/oder Oleoresinen verarbeitet werden und Suspensionen von gemahlenen Ölsaaten oder deren Pressrückstände sowie Fruchtmus wie Avocado zur Gewinnung von Fruchtölen verarbeitet werden.

## Patentansprüche

1. Verfahren zum Extrahieren von Lipiden aus wässrigen Suspensionen von Biomasse, insbesondere aus aufgeschlossenen Algensuspensionen, unter Verwendung von mit Wasser nicht mischbaren Lösungsmitteln, **dadurch gekennzeichnet, dass** die Suspension mit einem Biomasseanteil bis 50 Gew.-% kontinuierlich in einen druckfesten Dünnschichtextraktor eingepresst wird, ein dünner Film der Suspension am zylindrischen Innenmantel des Extraktors ausgebildet wird, der dünne Film mit dem Lösungsmittel, welches in dem Dünnsohichtextraktor in flüssigem oder überkritischem Zustand vorliegt, in Kontakt gebracht wird, der dünne Film mit Hilfe eines im Extraktor angeordneten Rotors mechanisch beaufschlagt wird, wobei der dünne Film der Suspension durch die mechanische Beaufschlagung über zumindest einen Teil der Schichtstärke des dünnen Films ständig erneuert wird, die Suspension im ringförmigen Spalt zwischen Innermantel des Extraktors und Außenumfang des Rotors nach unten gedrückt wird und das mit den extrahierten Lipiden beladene Lösungsmittel aus dem Extraktor ausgetragen wird, worauf das Lösungsmittel isobar durch Phasenwechsel oder durch Entspannen aus der Lösung aus Lösungsmittel und Lipiden zurückgewonnen und die extrahierten Lipide abgetrennt werden.

2. Verfahren nach Anspruch 1, **dadurch gekennzeichnet, dass** als Lösungsmittel kurzkettige Alkane, insbesondere Propan eingesetzt wird.

3. Verfahren nach Anspruch 1 oder 2, **dadurch gekennzeichnet, dass** als Algenrohstoff Mikroalgen eingesetzt werden.

4. Verfahren nach einem der Ansprüche 1, 2 oder 3, **dadurch gekennzeichnet, dass** der Algenanteil der Algensuspension 5-40 Gew.-%, insbesondere 10-35 Gew.-%, bevorzugt 15-30 Gew.-% und insbesondere bevorzugt 20-25 Gew.-% beträgt.

5. Verfahren nach einem der Ansprüche 1 bis 4, **dadurch gekennzeichnet, dass** der Zellaufschluss der Algen enzymatisch mittels Cellulasen vorgenommen wird.

6. Verfahren nach einem der Ansprüche 1 bis 5, **dadurch gekennzeichnet, dass** die Algen mechanisch aufgeschlossen werden.

7. Verfahren nach einem der Ansprüche 1 bis 6, **dadurch gekennzeichnet, dass** die extrahierten Lipide durch Veresterung zu Biodiesel und/oder durch Cracken zu anderen Kraftstoffen weiterverarbeitet werden.

8. Verfahren nach einem der Ansprüche 1 bis 7, **dadurch gekennzeichnet, dass** die Rückstände der Extraktion durch Fermentation zu Bioethanol bzw. Biogas weiterverarbeitet werden.

## Claims

1. A method for extracting lipids from aqueous suspensions of biomass, in particular disrupted algal suspensions, using water-immiscible solvents, **characterized in that** the suspension having a biomass portion of up to 50% by weight is continuously introduced to a pressure-proof thin-film extractor, a thin film is formed at the cylindrical inner periphery of the extractor, the thin film is contacted with the solvent present within the thin-film extractor in the liquid or supercritical state, the thin-film is mechanically impacted with the help of a rotor, which is arranged in the extractor, whereupon the thin film of the suspension is continuously renewed by mechanical impact at least over a portion of the film thickness of the thin film, the suspension being pressed downwards in the annular gap provided between the inner periphery of the extractor and the outer periphery of the rotor and the solvent loaded with the extracted lipids being subsequently drawn off from the extractor, whereupon the solvent is recovered from the solution of solvent and lipids either in isobaric form by a phase change or by depressurisation, and the extracted lipids are separated.

2. A method according to claim 1, **characterized in that** short-chain alkanes, particularly propane, are used as said solvent.

3. A method according to claim 1 or 2, **characterized in that** microalgae are used as algal raw material.

4. A method according to any one of claims 1, 2 or 3, **characterized in that** the algal portion of the algal suspension is 5-40% by weight, in particular 10-35% by weight, preferably 15-30% by weight and, in a particularly preferred manner, 20-25% by weight.

5. A method according to any one of claims 1 to 4, **characterized in that** the cellular disruption of the algae is effected enzymatically using cellulases.

6. A method according to any one of claims 1 to 5, **characterized in that** the algae are mechanically disrupted.

7. A method according to any one of claims 1 to 6, **characterized in that** the extracted lipids are further processed to biodiesel by esterification and/or to other fuels by cracking.

8. A method according to any one of claims 1 to 7, **characterized in that** the extraction residues are further processed to bioethanol or biogas by fermentation.

## Revendications

1. Procédé pour extraire des lipides de suspensions aqueuses de biomasses, en particulier de suspensions d'algues désagrégées, en utilisant des solvants non miscibles à l'eau, **caractérisé en ce que** la suspension possédant une fraction de biomasse allant jusqu'à 50 % en poids est injectée sous pression en continu dans un extracteur à couche mince résistant à la pression, **en ce qu'**un film mince de la suspension est formé contre la paroi intérieure cylindrique de l'extracteur, le film mince est mis en contact avec le solvant qui est présent dans l'extracteur à couche mince à l'état liquide ou surcritique, le film mince est soumis à un traitement mécanique à l'aide d'un rotor disposé dans l'extracteur, le film mince de la suspension étant continuellement renouvelé par la charge mécanique sur au moins une partie de l'épaisseur de la couche du film mince, la suspension est comprimée vers le bas dans une fente annulaire formée entre la paroi intérieure de l'extracteur et la périphérie extérieure du rotor puis le solvant chargé des lipides extraits est évacué de l'extracteur, après quoi le solvant est récupéré de la solution composée de solvant et de lipides dans un processus isobare par transformation de phase ou par détente, et les lipides extraits sont séparés.

2. Procédé selon la revendication 1, **caractérisé en ce qu'**on utilise comme solvant des alcanes à chaîne courte, en particulier du propane.

3. Procédé selon la revendication 1 ou 2, **caractérisé en ce qu'**on utilise des micro-algues comme algues de départ.

4. Procédé selon l'une des revendications 1, 2 ou 3, **caractérisé en ce que** la fraction d'algues de la suspension d'algues est de 5 à 40 % en poids, en particulier de 10 à 35 % en poids, de préférence de 15 à 30 % en poids, et de façon particulièrement préférée de 20 à 25 % en poids.

5. Procédé selon l'une des revendications 1 à 4, **caractérisé en ce que** le fractionnement cellulaire des algues s'effectue par voie enzymatique au moyen de cellulases.

6. Procédé selon l'une des revendications 1 à 5, **caractérisé en ce que** les algues sont désagrégées par voie mécanique.

7. Procédé selon l'une des revendications 1 à 6, **caractérisé en ce que** les lipides extraits sont transformés en biodiesel par estérification et/ou en d'autres carburants par craquage.

8. Procédé selon l'une des revendications 1 à 7, **caractérisé en ce que** les résidus de l'extraction sont transformés en bioéthanol ou en biogaz par fermentation.
